# DEMANDE DE BREVET EUROPEEN

(11) **EP 3 139 574 A1**
(43) Date de publication de la demande: **08.03.2017**
(21) Numéro de dépôt: 16178953.2
(22) Date de dépôt: 12.07.2016
(51) Int. Cl.: H04L 29/12, G06F 13/42, H02J 3/00, H04L 12/40, H04L 12/46

(54) **METHODE D'ADRESSAGE AUTOMATIQUE DANS UNE ARCHITECTURE DE COMMUNICATION ETHERNET**

(30) Priorité: 04.09.2015 FR 1558198
(71) Demandeur: Schneider Electric Industries SAS, 92500 Rueil-Malmaison (FR)
(72) Inventeur: SINISTRO, Stéphane, 69005 Lyon (FR); SUPTITZ, Eric, 38210 Montaud (FR)
(74) Mandataire: Dufresne, Thierry

(57) **Abrégé**

Procédé de configuration de plusieurs modules clients par un module serveur connectés entre eux via un réseau de communication Ethernet de type daisy-chain, chaque module client comprenant un switch Ethernet doté d'un premier port de communication et d'un second port de communication, de telle sorte que le premier port d'un premier module client est connecté à un port de communication du module serveur et que le premier port d'un autre module client est connecté au second port d'un module client adjacent. Le procédé comprend pour chaque module client une étape d'initialisation dans laquelle le module client active son premier port et désactive son second port, une étape d'identification dans laquelle le module client communique avec le module serveur par son premier port dans le but de recevoir un identifiant, et une étape de fin de configuration dans laquelle, une fois son identifiant reçu, le module client active son second port.

## Description

### Domaine technique de l'invention

La présente invention se rapporte à une méthode de configuration automatique d'adressage dans une architecture de communication comprenant des appareils communiquant entre eux via un réseau de communication Ethernet de type daisy-chain, c'est-à-dire que les appareils sont connectés en cascade (ou en guirlande).

Un domaine d'application concerné est par exemple l'architecture modulaire d'un poste de téléconduite dans une sous-station MV/LV d'un réseau de distribution électrique (MV : Medium Voltage ou Moyenne Tension ou HTA, LV : Low Voltage ou Basse Tension). Un tel poste de téléconduite comporte généralement différents modules fonctionnels distincts qui peuvent assurer des fonctions de mesure de tension/courant au niveau d'équipements MV ou LV, des fonctions de surveillance de la qualité et de gestion du réseau électrique, des fonctions de détection de défaut, de contrôle/commande des équipements, etc...

### Etat de la technique

Ce type d'architecture modulaire (ou RTU modulaire - Remote Terminal Unit) peut aussi comporter un module serveur central en charge d'une part de faire une interface de communication avec un système de supervision centralisé et d'autre part de gérer différents modules fonctionnels clients MV ou LV.

Les modules sont, par exemple, physiquement placés de façon adjacente sur un rail DIN. Le module serveur est placé en tête et les modules clients sont rangés les uns à côté des autres. Une difficulté de ce type d'architecture modulaire est de pouvoir configurer simplement les différents modules clients, c'est-à-dire affecter à chaque module une adresse physique (quelle est sa position sur la rangée du rail DIN) et lui associer ensuite une adresse IP pour que le module serveur puisse retrouver la configuration physique de la rangée.

Il existe déjà des protocoles existants (tels que DHCP, DPWS, DNS,...) qui permettent d'affecter des adresses IP ou des noms uniques à chaque module, néanmoins l'enregistrement de la position physique du module nécessite une opération humaine (appui sur un bouton du module pendant la phase de mise en service, allumage d'une LED pour reconnaitre où est le module qui correspond à telle adresse MAC, lecture sur une étiquette et recopie dans une page Web de l'adresse MAC du module, etc...).

D'autres documents, comme notamment FR2641629, US6688910, US8791646, décrivent déjà des méthodes automatiques ou semi-automatiques d'identification et d'allocation d'adresse sur un réseau de communication. Ces méthodes ne sont pas toujours simples et nécessitent par exemple l'existence d'un numéro de série électronique unique dans chaque module client, une mesure électrique pour déterminer la position physique d'un module client, un comptage de pulsations pour connaitre le nombre de modules connectés, etc... Par ailleurs, le document US7139839 prévoit un bus de communication entre les différents modules mais prévoit également un bus d'adressage distinct, dans le but de pouvoir assigner automatiquement un identifiant (par exemple une adresse MAC) à chaque module client.

Le document US2009213763 décrit une méthode pour assigner des adresses IP à des modules clients connectés dans un réseau en anneau à un module serveur, d'une façon non séquentielle. Les documents US5914957 et WO0308599 décrivent une méthode de configuration dans laquelle le serveur doit prendre l'initiative de configurer un à un chaque module client.

Le but de l'invention est donc de proposer une méthode très simple et flexible de configuration automatique sans les inconvénients cités et qui permette à un module serveur, à l'issue d'une phase de mise en service, de connaitre l'ensemble des modules clients présents connectés, leur position/adresse physique sur la rangée ainsi que leur identification (adresse IP ou adresse MAC).

La méthode selon l'invention peut être avantageusement utilisée lors d'une première configuration de l'architecture. De plus, cette méthode permet de gérer plus facilement et plus rapidement le remplacement d'un module client défectueux et l'adjonction d'un module client supplémentaire dans le réseau de communication, car ce sont les modules clients qui prennent l'initiative de demander un identifiant au module serveur.

### Exposé de l'invention

Ce but est atteint à l'aide d'un procédé de configuration de plusieurs modules clients par un module serveur, les modules clients et le module serveur étant connectés entre eux via un réseau de communication Ethernet de type daisy-chain. Chaque module client comprend un switch Ethernet doté d'un premier port de communication et d'un second port de communication, de telle sorte que le premier port d'un premier module client est connecté à un port de communication du module serveur et que le premier port d'un autre module client est connecté au second port d'un module client adjacent. Le procédé comprend, pour chaque module client :
- Une étape d'initialisation dans laquelle le module client active son premier port et désactive son second port,
- Une étape d'identification dans laquelle le module client envoie, par son premier port, une requête de découverte au module serveur dans le but de recevoir un identifiant de la part du module serveur,
- Une étape de fin de configuration dans laquelle, une fois son identifiant reçu, le module client active son second port.

Durant l'étape d'identification, le module client envoie une requête de découverte au module serveur. Préférentiellement, en l'absence de réponse du module serveur, le module client envoie périodiquement une requête de découverte au module serveur. Suivant un mode de réalisation, les requêtes sont conformes au standard DHCP.

L'invention concerne également un système de téléconduite d'un réseau de distribution électrique comportant un module serveur et plusieurs modules clients connectés entre eux via un réseau de communication Ethernet de type daisy-chain, le système de téléconduite étant adapté pour mettre en oeuvre un tel procédé de configuration. L'invention concerne également un module client comprenant un switch Ethernet ayant deux ports de communication, le module client étant apte à s'insérer dans un système de téléconduite pour mettre en oeuvre un tel procédé de configuration.

On voit que la méthode repose sur une utilisation asymétrique des deux ports de communication du switch Ethernet des modules clients, ce qui permet d'identifier de façon séquentielle chaque module client par le module serveur. En effet, tant qu'un identifiant n'est pas attribué à un module client, celui-ci n'active pas son second port de communication, ce qui ne permet pas aux modules clients situés en aval d'échanger avec le module serveur.

### Brève description des figures

D'autres caractéristiques et avantages vont apparaître dans la description détaillée qui suit faite en regard des dessins annexés dans lesquels :
- la figure 1 représente un exemple d'architecture d'un système de téléconduite comportant un module serveur et quatre modules clients,
- les figures 2, 3 et 4 montrent des phases successives du procédé de configuration mis en oeuvre dans l'architecture de la figure 1.

### Description détaillée d'un mode de réalisation

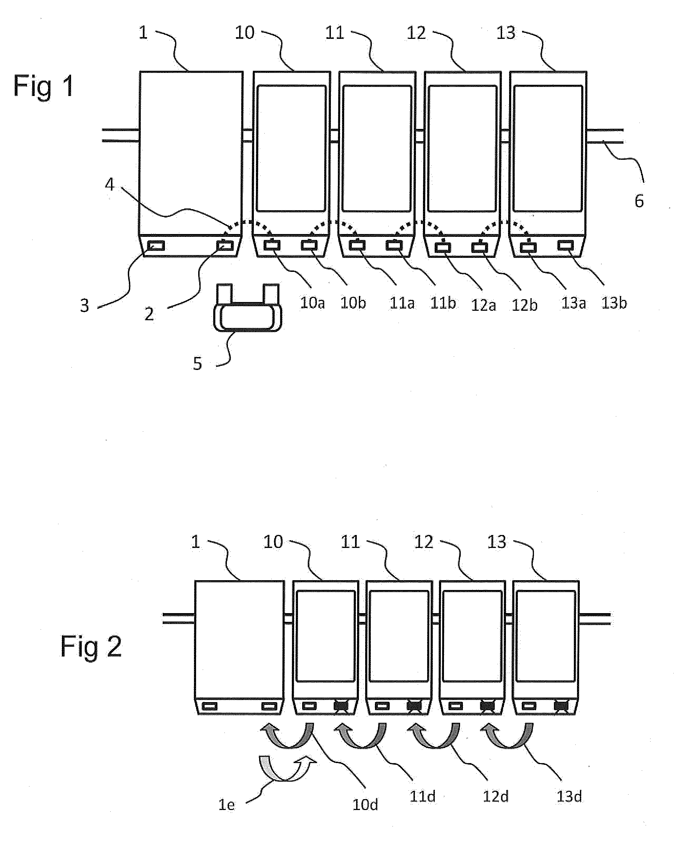

En référence à la figure 1, un système de téléconduite comporte un module serveur 1 et une pluralité de modules clients. Les différents modules sont connectés entre eux par un réseau de communication Ethernet IP (Internet Protocol) avec une connexion physique de type daisy-chain 4, c'est-à-dire que les modules sont connectés en cascade (ou en guirlande). Chaque module client 10, 11, 12, 13 possède un switch Ethernet qui est muni de deux ports de communication, appelés dans la suite du document premier port et second port. Les premiers ports sont appelés 10a, respectivement 11a, 12a et 13a et les seconds ports sont appelés 10b, respectivement 11 b, 12b et 13b. Le switch Ethernet d'un module client est capable de router les messages entre le premier port et le second port et réciproquement.

Tous les modules sont physiquement reliés entre eux par un dispositif de connexion 5 qui permet de connecter et déconnecter très facilement chaque module avec son ou ses voisins adjacents (c'est-à-dire son voisin précédent et son voisin suivant). Selon un mode de réalisation particulier, le dispositif de connexion a la forme d'un cavalier 5 en forme de U et comportant deux connecteurs par exemple de type RJ45 raccordés par un câble. Sur la figure 1, un seul cavalier 5 a été représenté pour des raisons de simplification, mais évidemment il existe aussi un cavalier entre les ports 10b et 11 a, entre 11 b et 12a et entre 12b et 13a.

De façon simple, les modules 1, 10, 11, 12, 13 peuvent être placés à la chaine les uns à côté des autres et fixés par exemple sur un rail DIN 6, le module serveur 1 étant placé à une extrémité de la chaine. Ainsi, un port de communication 2 du module serveur 1 est connecté avec le premier port 10a du premier module client 10, placé à côté du module serveur 1. Le module serveur 1 peut aussi comporter un ou plusieurs autres ports de communication 3, pour se connecter à un superviseur ou ordinateur central.

Le second port 10b du premier module client 10 est raccordé au premier port du module client 11 adjacent au module 10. Ainsi, les seconds ports de tous les modules clients 10, 11, 12, 13 sont connectés aux premiers ports du module client suivant dans la chaine, sous réserve évidemment qu'un tel module client suivant existe. De même, les premiers ports des modules clients 11, 12, 13 autres que le premier module client 10 sont connectés au second port d'un module client précédent.

Dans l'exemple de la figure 1, le premier module client 10 est placé à côté du module serveur et, durant le procédé de configuration, se verra donc attribuer automatiquement l'adresse physique 1 correspondant à sa position physique sur la rangée. De même, le module client 11, placé à côté du module 10, se verra attribuer l'adresse physique 2, et ainsi de suite le module client 12 l'adresse physique 3, le module client 13 l'adresse physique 4. En effet, étant donné le mode de connexion en cascade, le module client 10 sera le premier à échanger avec le module serveur 1 durant le procédé de configuration, puis le module 11, etc... Préférentiellement, pour chaque nouveau module client le module serveur 1 incrémente l'adresse physique à attribuer.

Une telle architecture modulaire est très simple à mettre en oeuvre et peut ainsi facilement comporter un grand nombre de modules raccordés de cette façon, par exemple 24 modules.

Avantageusement, lors d'un remplacement d'un module client 12 défectueux par exemple, le système de conduite relancera le procédé de configuration de telle sorte que le nouveau module 12 de remplacement puisse se voir très simplement attribuer automatiquement l'adresse physique 3, sans avoir besoin d'une intervention sur ce module de remplacement. De même lorsque le système de conduite doit ajouter un nouveau module client fonctionnel.

Le déroulement du procédé de configuration est le suivant :

La figure 2 représente la première étape du procédé de configuration, dite étape d'initialisation, dans laquelle tous les modules clients 10, 11, 12, 13 se mettent dans un état non-configuré, activent leur premier port 10a, 11 a, 12a, 13a et désactivent leur second port 10b, 11 b, 12b, 13b (port désactivé : indiqué en noir sur les figures). Etant donné l'architecture du réseau de communication en daisy-chain, cela signifie qu'au démarrage seul le premier module client 10 est en mesure d'échanger avec le module serveur 1. Les autres modules clients ne le peuvent pas, puisque le second port 10b du premier module 10 est désactivé.

Après cette étape d'initialisation, les modules clients 10, 11, 12, 13 passent à une étape d'identification dans laquelle les modules clients essaient de communiquer avec le module serveur 1 par leur premier port 10a, 11 a, 12a, 13a dans le but de recevoir un identifiant de la part du module serveur 1.

Pour cela, l'étape d'identification présente deux variantes possibles :
a) selon une première variante, les modules clients 10, 11, 12, 13 envoient une requête de découverte (par exemple de type DHCP Discovery) 10d, 11 d, 12d, 13d au module serveur qui est en mode «écoute». Si le module serveur reçoit une telle requête, il répond alors au module client émetteur de la requête de découverte par une requête d'offre 1e (par exemple de type DHCP Offer).
   Si un module client émetteur d'une requête de découverte ne reçoit pas de réponse du module serveur au bout d'un certain temps prédéterminé, alors il réémet périodiquement sa requête de découverte 10d, 11 d, 12d, 13d et reste dans l'étape d'identification.
b) selon une deuxième variante, ce ne sont plus les modules clients qui initient périodiquement les échanges avec le module serveur 1, mais le module serveur 1 qui émet régulièrement une requête d'offre (par exemple de type DHCP Offer) sur le réseau de communication. S'il reçoit une réponse à cette requête, cela signifie qu'il reste encore sur le réseau au moins un module client à configurer.

Cette deuxième variante permet d'éviter aux modules clients d'émettre en permanence des requêtes de découverte inutilement, tant qu'ils ne sont pas réellement en mesure de discuter avec le module serveur, mais rend plus complexe le remplacement d'un module client défectueux ou l'adjonction d'un nouveau module client.

Lorsqu'un module client reçoit une requête d'offre de la part du module serveur 1 et que ce module client n'est pas à l'état configuré, alors il répond au module serveur 1 par une requête, par exemple du type DHCP Request et le module serveur 1 sera alors capable de renvoyer au module client une requête de reconnaissance (du type DHCP ACK) qui lui attribue un identifiant, cet identifiant comportant une adresse physique et une adresse IP, ainsi que d'éventuels autres paramètres.

Lorsqu'un module client se voit ainsi attribuer un identifiant par le module serveur 1, il passe alors dans une étape dite de fin de configuration, dans laquelle il se positionne en mode configuré et active son second port de communication. Ainsi, le module client suivant dans la chaine pourra alors commencer à échanger avec le module serveur 1 puisque sa requête de découverte pourra être reçue par le module serveur 1.

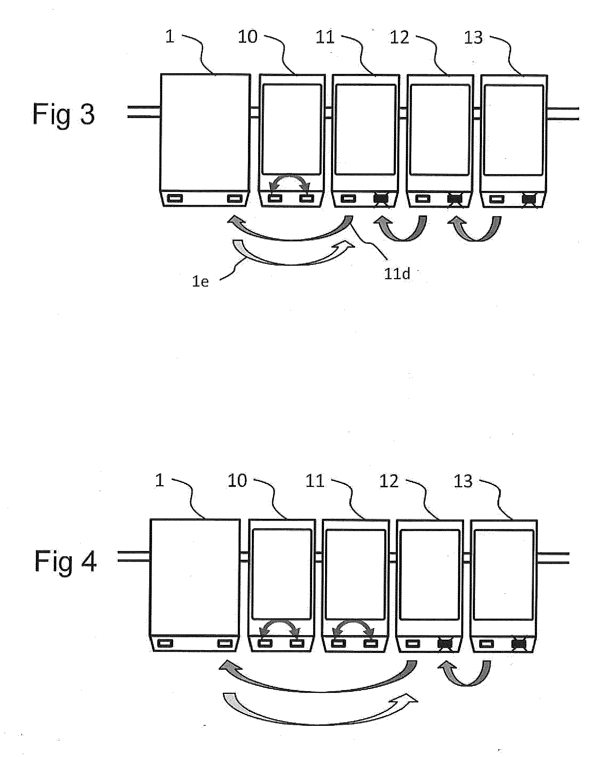

Dans la figure 3, on voit ainsi que le module client 10, ayant reçu un identifiant, est à l'état configuré et a activé son second port 10b, ce qui permet désormais au module client 11 adjacent au module 10 de communiquer avec le module serveur 1. Celui-ci peut donc recevoir une requête de découverte 11 d du module client 11 et lui transmettre une requête d'offre 1 e, le switch Ethernet du module client 10 étant désormais capable de router les messages.

Dans la figure 4, le serveur 1 a pu attribuer un identifiant au module client 11, lequel a désormais activé son second port 11 b de façon à permettre des échanges entre le serveur 1 et module client adjacent 12.

Lorsque le module serveur 1 ne reçoit plus de requête de découverte provenant de modules clients 10, 11, 12, 13, ou lorsqu'il ne reçoit plus de réponse à une requête d'offre, cela signifie que tous les modules clients sont configurés 10, 11, 12, 13 et ont activé leur second port de communication, mettant ainsi fin au procédé de configuration.

Optionnellement, des voyants LED représentatifs de l'état activé/désactivé de chaque port de communication d'un module permettent à un utilisateur de suivre de façon simple où en est le procédé de configuration d'un système de téléconduite.

## Revendications

1. Procédé de configuration de plusieurs modules clients (10, 11, 12, 13) par un module serveur (1), les modules clients et le module serveur étant connectés entre eux via un réseau de communication Ethernet (4) de type daisy-chain, chaque module client comprenant un switch Ethernet doté d'un premier port de communication (10a, 11 a, 12a, 13a) et d'un second port de communication (10b, 11 b, 12b, 13b), de telle sorte que le premier port (10a) d'un premier module client (10) est connecté à un port de communication (2) du module serveur (1) et que le premier port d'un autre module client (11, 12, 13) est connecté au second port d'un module client adjacent, **caractérisé en ce que** le procédé comprend pour chaque module client :
- Une étape d'initialisation dans laquelle le module client active son premier port et désactive son second port,
- Une étape d'identification dans laquelle le module client envoie, par son premier port, une requête de découverte au module serveur dans le but de recevoir un identifiant de la part du module serveur,
- Une étape de fin de configuration dans laquelle, une fois son identifiant reçu, le module client active son second port.

2. Procédé de configuration selon la revendication 1, **caractérisé en ce que**, durant l'étape d'identification et en l'absence de réponse du module serveur, le module client envoie périodiquement une requête de découverte au module serveur.

3. Procédé de configuration selon l'une des revendications 1 ou 2, **caractérisé en ce que** les requêtes sont conformes au standard DHCP.

4. Procédé de configuration selon la revendication 1, **caractérisé en ce que** l'identifiant d'un module client comporte une adresse IP et une adresse physique.

5. Système de téléconduite d'un réseau de distribution électrique comportant un module serveur (1) et plusieurs modules clients (10, 11, 12, 13) connectés entre eux via un réseau de communication (4) Ethernet de type daisy-chain, **caractérisé en ce que** le système de téléconduite est adapté pour mettre en oeuvre un procédé de configuration selon l'une des revendications précédentes.

6. Module client (10, 11, 12, 13) d'un système de téléconduite comprenant un switch Ethernet doté d'un premier port de communication (10a, 11 a, 12a, 13a) et d'un second port de communication (10b, 11b, 12b, 13b), **caractérisé en ce que** le module client est adapté pour mettre en oeuvre un procédé de configuration selon l'une des revendications 1 à 4.
